# EUROPÄISCHE PATENTANMELDUNG

(11) **EP 3 722 983 A1**
(43) Veröffentlichungstag der Anmeldung: **14.10.2020**
(21) Anmeldenummer: 19168128.7
(22) Anmeldetag: 09.04.2019
(51) Int. Cl.: G06F 21/72, H04L 29/08, G06F 21/74, G06F 21/87

(54) **SICHERHEITSVORRICHTUNG UND VERFAHREN ZUR ÜBERWACHUNG EINES ZUGRIFFS EINES GERÄTES AUF EINE SICHERHEITSVORRICHTUNG**

(71) Anmelder: Siemens Aktiengesellschaft, 80333 München (DE)
(72) Erfinder: Falk, Rainer, 85586 Poing (DE); Feist, Christian Peter, 80689 München (DE); Fischer, Kai, 85598 Baldham (DE); Schneider, Daniel, 80796 München (DE)

(57) **Zusammenfassung**

Die Erfindung betrifft ein Verfahren zur Überwachung eines Zugriffs eines Gerätes (10) auf eine Sicherheitsvorrichtung (11) und eine Sicherheitsvorrichtung zur Ausführung mindestens einer kryptographischen Sicherheitsfunktion, die fest oder lösbar mit einem Gerät (10) verbindbar ist, und derart ausgebildet ist, einen aktuellen Betriebsmodus des Geräts (10) zu empfangen, den aktuellen Betriebsmodus des Geräts (10) gegenüber einer vorgegebenen Richtlinie zu überprüfen, und abhängig von einem Überprüfungsergebnis des aktuellen Betriebsmodus des Geräts (10) einen Zugriff auf unterschiedliche Funktionen der Sicherheitsvorrichtung (11) durch das Gerät (10) zu erlauben. Dies ermöglicht es eine unzulässige Nutzung einer Sicherheitsvorrichtung (11) durch das Gerät (10) zu verhindern oder zumindest zu erschweren.

## Beschreibung

Die Erfindung betrifft eine Sicherheitsvorrichtung zur Ausführung mindestens einer kryptographischen Sicherheitsfunktion, die fest oder lösbar mit einem Gerät verbindbar ist, sowie ein Verfahren zur Überwachung des Zugriffs des Gerätes auf die Sicherheitsvorrichtung.

Sicherheitsvorrichtungen, wie beispielsweise ein Kryptocontroller, ein Hardware-Sicherheitsmodul HSM, ein Sicherheitstoken oder ein vertrauenswürdiges Plattformmodul TPM, erlauben ein sicheres Speichern von kryptographischen Schlüsseln und ein Durchführen von kryptographischen Operationen bzw. kryptographischen Funktionen. Sicherheitsvorrichtungen sind beispielsweise aus den Druckschriften EP2628121 B1, EP 3403214 A1 bekannt.

Eine Sicherheitsvorrichtung kann dabei fest oder lösbar mit einem Gerät, beispielsweise einem sogenannten IoT-Gerät, das in einem Internet der Dinge mit anderen Geräten, oder mit einem Steuergerät kommuniziert, sein. Die Sicherheitsvorrichtung stellt eine geschützte Umgebung bereit, in der beispielsweise kryptographische Schlüssel gespeichert sind oder kryptographische Funktionen mit oder ohne Verwendung der kryptographischen Schlüssel basierend auf einer Aufforderung des Geräts, durchgeführt und an das Gerät wieder ausgegeben werden.

Dabei ist üblicherweise der Zugriff auf eine Sicherheitsvorrichtung oder eine angebotene Funktionalität der Sicherheitsvorrichtung erst nach Authentisierung eines Nutzers der Sicherheitsvorrichtung möglich. Der Nutzer ist dabei das Gerät selbst oder ein menschlicher Nutzer, der sich beispielsweise durch eine PIN, ein Passwort oder über biometrische Merkmale authentisiert.

Weiterhin können auf einer Sicherheitsvorrichtung kritische Funktionalitäten, zum Beispiel eine Merkmalsanalyse eines Bildes durch ein neuronales Netz durchgeführt werden. Durch die Sicherheitsvorrichtung ist eine manipulationsgeschützte und auslesegeschützte Ausführungsumgebung dafür gegeben.

Dabei kann es bei einer Fehlfunktion oder einer Manipulation des Gerätes dazu kommen, sodass ein manipulierter ausführbarer Programmcode oder ein Diagnosecode auf die Sicherheitsvorrichtung zugreift. Dadurch könnte ein kryptographischer Schlüssel oder eine andere Funktionalität der Sicherheitsvorrichtung auf nicht vorgesehene Art oder zu einem nicht vorgesehenen Zeitpunkt verwendet werden.

Es ist daher die Aufgabe der Erfindung, eine unzulässige Nutzung einer Sicherheitsvorrichtung zu verhindern oder zumindest zu erschweren.

Die Aufgabe wird durch die in den unabhängigen Ansprüchen beschriebenen Maßnahmen gelöst. In den Unteransprüchen sind vorteilhafte Weiterbildungen der Erfindung dargestellt.

Ein erster Aspekt der Erfindung betrifft eine Sicherheitsvorrichtung zur Ausführung mindestens einer kryptographischen Sicherheitsfunktion, die fest oder lösbar mit einem Gerät verbindbar ist und derart ausgebildet ist, einen aktuellen Betriebsmodus des Geräts zu empfangen und den aktuellen Betriebsmodus gegenüber einer vorgegebenen ersten Richtlinie zu überprüfen und abhängig von einem Überprüfungsergebnis des aktuellen Betriebsmodus des Geräts einen Zugriff auf Sicherheitsvorrichtung durch das Gerät zu erlauben.

Somit ist eine Sicherheitsvorrichtung nur dann vom Gerät aus nutzbar, wenn das Gerät sich in einem regulären, fehlerfreien Betriebszustand befindet. Der Zugriff kann auch auf bestimmte Funktionen der Sicherheitsvorrichtung abhängig von einem vorher definierten Betriebsmodus erlaubt sein. Der erlaubte Zugriff wird entsprechend der Entscheidung durchgesetzt, d.h. der Zugriff wird auf die bestimmten erlaubten Funktionen beschränkt. Dadurch ist es ebenfalls vorteilhaft möglich, manche kryptographischen Schlüssel, die während beispielsweise eines Startvorgangs des Gerätes zum Entschlüsseln von verschlüsselter Firmware oder verschlüsselten Konfigurationsdaten nutzbar sind, in anderen Betriebszuständen jedoch gesperrt sind. Entsprechendes gilt für kryptographische Schlüssel, die zum Schutz von Betriebsdaten beim Aktivieren eines "Power-Safe"-Betriebsmodus und/oder beim Aufwachen aus einem Power-Safe-Betriebsmodus verwendet werden. Die Zugriffsbedingungen sind in der ersten Richtlinie enthalten und werden vor dem tatsächlichen Zugriff überprüft. Die Richtlinie ist beispielsweise auf einer eigenen oder einer gemeinsamen sicheren Speichereinheit, auf der kryptographische Schlüssel sowie die genannten kryptographischen Sicherheitsfunktion geschützt abgespeichert sind, in der Sicherheitsvorrichtung gespeichert.

Beispiele für übertragene Betriebsmodi des Geräts, die beispielsweise jeweils als aktiv/inaktiv gekennzeichnet sind, sind: Normalbetrieb, Stand-by, Schlafmodus, Startphase, Aufwachphase, Ausschaltphase, Servicezugang, Inbetriebnahme, Aktualisierungsmodus, Selbst-Test-Fehler, Integritätsfehler.

In einer vorteilhaften Ausführungsform weist die Sicherheitsvorrichtung eine Sicherheitsfunktionseinheit auf, die derart ausgebildet ist, mindestens eine kryptographische Sicherheitsfunktion auszuführen, und eine Nutzerschnittstelle, die zwischen dem Gerät und der Sicherheitsfunktionseinheit ausgebildet ist, wobei der aktuelle Betriebsmodus des Gerätes über die Nutzerschnittstelle in der Sicherheitsfunktionseinheit empfangbar ist.

Die Nutzerschnittstelle ist die Schnittstelle, über die das Gerät auf kryptographische Funktionen auf der Sicherheitsfunktionseinheit zugreift. Ist auch der Betriebsmodus über die Nutzerschnittstelle in der Sicherheitsfunktionseinheit empfangbar, wird diese verfügbare Schnittstelle mitgenutzt und somit keine zusätzliche Schnittstelle zwischen Gerät und Sicherheitsvorrichtung benötigt. Damit bleibt die Anbindung zwischen Sicherheitsvorrichtung und Gerät einfach strukturiert und kostengünstig implementierbar.

In einer vorteilhaften Ausführungsform umfasst die Sicherheitsvorrichtung eine Betriebserkennungseinrichtung, die derart ausgebildet ist, einen aktuellen Betriebsmodus des Gerätes zu ermitteln, den aktuellen Betriebsmodus gegenüber einer zweiten Richtlinie zu prüfen und abhängig vom Prüfergebnis einen Zugriff auf die Sicherheitsfunktionseinheit zu erlauben.

Die Betriebserkennungseinheit ist bevorzugt getrennt von einer Steuereinheit des Geräts ausgebildet. Dies hat den Vorteil, dass der Betriebsmodus des Gerätes unabhängig vom Gerät, insbesondere unabhängig von einer zentralen Steuereinheit des Gerätes, ermittelbar ist. Somit kann das Gerät selbst nicht direkt Einfluss auf den ermittelten Betriebszustand nehmen. Dies wäre insbesondere möglich, wenn das Gerät selbst beziehungsweise eine insbesondere zentrale Steuereinheit im Gerät in unerlaubter Weise verändert oder manipuliert wäre.

In einer vorteilhaften Ausführungsform umfasst die Sicherheitsvorrichtung eine Erkennungsschnittstelle zwischen der Betriebserkennungseinrichtung und der Sicherheitsfunktionseinheit, über die der aktuelle Betriebsmodus des Gerätes an die Sicherheitsfunktionseinheit übermittelbar ist.

Dies hat den Vorteil, dass eine dedizierte Schnittstelle zwischen der Betriebserkennungseinrichtung und der Sicherheitsfunktionseinheit ausgebildet ist, und somit eine Trennung der beiden Funktionseinheiten gegeben ist.

In einer vorteilhaften Ausführungsform ist die Erkennungsschnittstelle als mindestens eine Signalleitung ausgebildet, wobei ein Schaltsignal auf der mindestens einen Signalleitung jeweils einen vorgegebenen Betriebsmodus anzeigt.

Dies hat den Vorteil, dass ein Schaltsignal auf einer Signalleitung von der Sicherheitsfunktionseinheit als ein bestimmter Betriebsmodus erkannt wird. Somit bleibt die Sicherheitsvorrichtung einfach strukturiert, um den Betriebsmodus zu erkennen.

In einer vorteilhaften Ausführungsform ist die Erkennungsschnittstelle als Datenbus mit einem Sicherheitsprotokoll ausgebildet und der aktuelle Betriebsmodus ist mittels des Sicherheitsprotokolls anzeigbar.

Dies hat den Vorteil, dass zusätzliche Information zum aktuellen Betriebsmodus oder auch Details zu ermittelten Geräteparametern übermittelbar sind und in der Sicherheitsfunktionseinheit direkt auswertbar sind. Somit kann eine differenzierte Richtlinie eingerichtet sein, die Zugriffsoptionen abhängig von der zusätzlichen Information angibt.

In einer vorteilhaften Ausführungsform ist die Betriebserkennungseinrichtung mit mindestens einer Betriebseinheit des Geräts verbunden und empfängt Betriebsparameter des Gerätes von der mindestens einen Betriebseinheit.

Dies hat den Vorteil, dass Betriebsparameter direkt von Betriebseinheiten in der Betriebserkennungseinheit empfangbar sind und nicht über die zentrale Steuereinheit an die Betriebserkennungseinheit gemeldet werden. Somit sind korrekte beziehungsweise nicht-manipulierte Betriebsparameter auch bei einer Manipulation des Gerätes zur Ermittlung des aktuellen Betriebsmodus nutzbar.

In einer vorteilhaften Ausführungsform umfasst die Sicherheitsvorrichtung eine Vorsicherheitsfunktionseinheit, die derart ausgebildet ist, ein Freischaltsignal an die Sicherheitsfunktionseinheit zu übermitteln, wenn vorgegebene Betriebsbedingungen in Bezug auf den Betriebsmodus des Gerätes in der Vor-Sicherheitsfunktionseinheit vorliegen.

Dies hat den Vorteil, dass die der Vorsicherheitsfunktionseinheit nachgelagerte Sicherheitsfunktionseinheit erst dann freigeschaltet wird, wenn die Betriebsbedingungen in der Vorsicherheitsfunktionseinheit erfüllt sind. Eine Vorsicherheitsfunktionseinheit ist beispielsweise eine von der Sicherheitsfunktionseinheit getrennte weitere Sicherheitsfunktionseinheit, die für eine unterschiedliche Gerätefunktion verwendet werden kann. Beispielsweise wird eine Vorsicherheitsfunktionseinheit für das Booten eines Systems und die Sicherheitsfunktionseinheit selbst für den operativen Betrieb des Gerätes verwendet.

Ein zweiter Aspekt der Erfindung betrifft ein Verfahren zur Überwachung eines Zugriffs eines Gerätes auf eine Sicherheitsvorrichtung, die mindestens eine kryptographische Sicherheitsfunktion ausführt und die fest oder lösbar mit dem Gerät verbunden ist, wobei in der Sicherheitsvorrichtung ein aktueller Betriebsmodus des Gerätes empfangen und gegenüber einer ersten Richtlinie geprüft wird und, abhängig von einem Prüfergebnis des aktuellen Betriebsmodus des Gerätes, ein Zugriff auf unterschiedliche Funktionen der Sicherheitsvorrichtung durch das Gerät erlaubt wird.

In vorteilhafter Weise wird dadurch der Zugriff eines manipulierten Gerätes auf die Sicherheitsvorrichtung im Gerät weiter erschwert.

In einer vorteilhaften Ausführungsform wird der aktuelle Betriebsmodus des Gerätes über eine Nutzerschnittstelle, die zwischen dem Gerät und einer Sicherheitsfunktionseinheit der Sicherheitsvorrichtung ausgebildet ist, in der Sicherheitsfunktionseinheit empfangen.

Dies ermöglicht eine einfache und direkte Übermittlung des Betriebsmodus vom Gerät an die Sicherheitsfunktionseinheit. In einer vorteilhaften Ausführungsform wird von einer Betriebserkennungseinheit der aktuelle Betriebsmodus des Geräts ermittelt, der aktuelle Betriebsmodus gegenüber einer zweiten Richtlinie geprüft und abhängig vom Prüfergebnis ein Zugriff auf die Sicherheitsfunktionseinheit erlaubt.

Dies ermöglicht eine differenzierte Auswertung des aktuellen Betriebsmodus und eine entsprechend differenzierte Zugriffsbeschränkung auf die Sicherheitsfunktionseinheit.

In einer vorteilhaften Ausführungsform wird der aktuelle Betriebsmodus kryptographisch geschützt an die Sicherheitsfunktionseinheit übermittelt.

Dies erschwert eine Manipulation des aktuellen Betriebsmodus durch unerlaubte Dritte. Dabei wird der aktuelle Betriebsmodus sowohl auf der Nutzerschnittstelle und auf der Erkennungsschnittstelle kryptographisch geschützt übertragen.

In einer vorteilhaften Ausführungsform wird ein Zugriff auf die Sicherheitsfunktionseinheit abhängig von einem Nutzer des Gerätes und/oder abhängig von einer Rolle des Nutzers, mit der sich der Nutzer am Gerät angemeldet hat, erlaubt.

Dies ermöglicht es, den Zugriff auf die Sicherheitsfunktionseinheit lediglich für bestimmte Nutzer des Gerätes beziehungsweise abhängig von einer Rolle, die der Nutzer bei der Registrierung am Gerät angibt, zu regeln.

Ein dritter Aspekt der Erfindung betrifft ein Computerprogrammprodukt, das direkt in einen Speicher eines digitalen Computers ladbar ist, aufweisend Programmcodeteile, die dazu geeignet sind, die Schritte des beschriebenen Verfahrens durchzuführen.

Sofern es in der nachfolgenden Beschreibung nicht anders angegeben ist, beziehen sich Begriffe wie "überprüfen" "erlauben", "empfangen", "ermitteln" und dergleichen vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt werden oder vorliegen können, beispielsweise als elektrische Impulse. Der Ausdruck "Computer" ist möglichst breit auszulegen, um insbesondere alle elektronischen Geräte mit Datenverarbeitungseigenschaften abzudecken. Computer können beispielsweise Personalcomputer, Server, Steuerungsgeräte und andere Kommunikationsgeräte, die rechnergestützt Daten verarbeiten können, Prozessoren und andere elektronische Geräte zur Datenverarbeitung sein.

Die jeweilige Einheit, zum Beispiel Sicherheitsfunktionseinheit, Betriebserkennungseinheit, Vorsicherheitsfunktionseinheit, kann hardwaretechnisch und/oder auch softwaretechnisch implementiert sein. Bei einer hardwaretechnischen Implementierung kann die jeweilige Einheit als Vorrichtung oder als Teil einer Vorrichtung, zum Beispiel als Computer oder als Mikroprozessor, ausgebildet sein. Bei einer softwaretechnischen Implementierung kann die jeweilige Einheit als Computerprogrammprodukt, als eine Funktion, als eine Routine, als Teil eines Programmcodes oder als ausführbares Objekt ausgebildet sein.

Ein Computerprogrammprodukt kann beispielsweise als Speichermedium, wie beispielsweise eine Speicherkarte, USB-Stick, CD-ROM, DVD oder auch in Form einer herunterladbaren Datei von einem Server in einem Netzwerk bereitgestellt oder geliefert werden. Ein Computerprogrammprodukt ist bevorzugter Weise auf einem nicht flüchtigen Speicher einer Vorrichtung gespeichert.

Ausführungsbeispiele der erfindungsgemäßen Sicherheitsvorrichtung sowie des erfindungsgemäßen Verfahrens sind in den Zeichnungen beispielhaft dargestellt und werden anhand der nachfolgenden Beschreibung näher erläutert. Es zeigen
- Figur 1: ein Ausführungsbeispiel der erfindungsgemäßen Sicherheitsvorrichtung; und
- Figur 2: ein Ausführungsbeispiel des erfindungsgemäßen Verfahrens als Ablaufdiagramm.
Einander entsprechende Teile sind in allen Figuren mit den gleichen Bezugszeichen versehen. Betriebsmodus und Betriebszustand werden im Folgenden synonym verwendet.

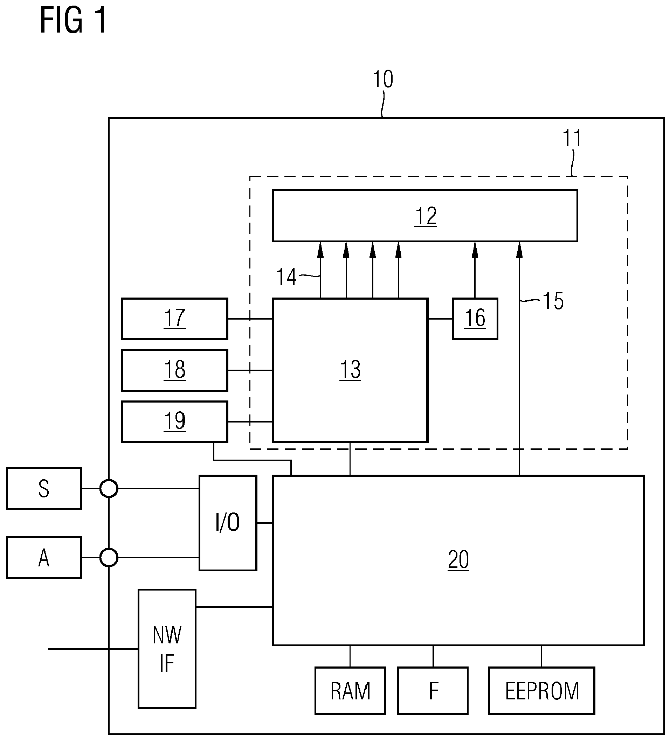

Figur 1 zeigt ein Gerät 10, beispielsweise ein "Internet der Dinge"-Gerät. Eine Steuereinheit 20, beispielsweise ein Zentralprozessor, der aus einem oder mehreren Prozessorkernen aufgebaut ist, ist mit einer flüchtigen Speichereinheit RAM, einer nichtflüchtigen Speichereinheit F für Programmcode und einer Konfigurationsspeichereinheit EEPROM verbunden. Ein Sensor S und ein Aktor A sind über eine Ein-/Ausgabe-Einheit I/O mit der Steuereinheit 20 verbunden. Eine Netzwerkschnittstelle NWIF, beispielsweise eine drahtgebundene Ethernet-Schnittstelle oder eine drahtlose WLAN-Schnittstelle, ist mit der Steuereinheit 20 verbunden und zur Kommunikation mit einem Backend-Server und/oder anderen Internet der Dinge-Geräten ausgebildet.

Im Gerät 10 ist eine Sicherheitsvorrichtung 11 angeordnet, die entweder fest mit dem Gerät 10 verbunden ist oder als eigene Hardwarekomponente mit dem Gerät, beispielsweise über einen Aufnahmesockel, verbindbar. Eine Nutzerschnittstelle 15 ist zwischen der Steuereinheit 20 und einer Sicherheitsfunktionseinheit 12 der Sicherheitsvorrichtung 11 angeordnet.

Das Gerät 10 verfügt optional über eine dedizierte Betriebserkennungseinheit 13, in der Betriebsmodi beziehungsweise Betriebszustände des Gerätes erkannt und verwaltet werden. Die Betriebserkennungseinheit 13 ist mit Betriebseinheiten 17, 18, 19 verbunden. Die Betriebseinheit 17 gibt beispielsweise eine Taktfrequenz des Geräts 10 vor beziehungsweise reguliert den Takt des Gerätes 10. Die Betriebseinheit 18 überwacht und regelt beispielsweise die Stromversorgung beziehungsweise einen von der Stromversorgung abhängigen Zustand des Gerätes 10, wie beispielsweise einen Standby- oder Aufwach- bzw. Wakeup-Zustand des Geräts 10. In der Betriebseinheit 19 ist beispielsweise eine Überwachungsfunktion, auch als Watchdog bezeichnet, der Steuereinheit 20, implementiert und mit der Betriebserkennungseinheit 13 verbunden. Die Betriebseinheiten 17, 18, 19 übermitteln kontinuierlich oder in zeitlich vorgegebenen Abständen selbsttätig oder auf Anfrage der Erkennungseinheit 13 Betriebsparameter des Gerätes 10 an die Betriebserkennungseinheit 13.

Die Betriebserkennungseinheit 13 kann bevorzugt als eine separate Einheit, beispielsweise als elektronische Baugruppe oder als ein Bereich einer Baugruppe, beispielsweise einem Prozessor oder einem programmierbaren Logikbaustein ausgebildet sein. Die Betriebserkennungseinheit 13 kann integriert mit der Sicherheitsfunktionseinheit 12 oder integriert mit der Steuereinheit 20 des Geräts ausgebildet sein.

In einer Ausführungsvariante übermittelt die Steuereinheit 20 den aktuellen Betriebsmodus über die Nutzerschnittstelle 15 an die Sicherheitsfunktionseinheit 12. In dieser Variante weist die Sicherheitsfunktionseinheit 12, beispielsweise in einem internen Speicher, eine erste Richtlinie auf. In bevorzugter Weise umfasst die Sicherheitsfunktionseinheit 12 ein Überprüfungsmodul, in dem der empfangene Betriebsmodus gegenüber der Richtlinie geprüft wird. Ein Zugriff auf die kryptographischen Schlüssel und/oder Funktionen, die bevorzugt in einem gesicherten Bereich der Sicherheitsfunktionseinheit 12 angeordnet sind, wird lediglich bei einem positiven Prüfergebnis und entsprechend der Richtlinien, gewährt.

In einer bevorzugten Ausführungsvariante ist eine Erkennungsschnittstelle 14 zwischen der Betriebserkennungseinheit 13 und der Sicherheitsfunktionseinheit 12 ausgebildet. Über diese Erkennungsschnittstelle 14 ist der aktuelle Betriebsmodus des Gerätes 10 von der Betriebserkennungseinheit 13 an die Sicherheitsfunktionseinheit 12 übermittelbar. Die Erkennungsschnittstelle 14 ist beispielsweise als jeweils eine Signalleitung für jeden möglichen Betriebszustand ausgebildet. Mittels eines Schaltsignals auf der jeweiligen Signalleitung kann ein der Signalleitung zugeordneter Betriebszustand an die Sicherheitsfunktionseinheit 12 signalisiert werden. So können beispielsweise die dargestellten vier Signalleitungen die aktuellen Betriebsmodi "Standby" oder "Startmodus", "Normalbetrieb" oder "Fehler" anzeigen.

Abhängig davon stellt die Sicherheitsfunktionseinheit 12 bestimmte Funktionalitäten über die Nutzerschnittstelle 15 der Steuereinheit 20 bereit. Beispielsweise teilt die Sicherheitsfunktionseinheit 11 der Steuereinheit 20 mit, für welche Operationen welche kryptographischen Schlüssel nutzbar sind. Beispielsweise kann während einer Startup-Phase eine kryptographische Prüfsumme erzeugt werden, wohingegen im "Operativer Betrieb" die Prüfsumme nur überprüfbar ist. Dies ist beispielsweise für eine Laufzeitintegritätsüberwachung der Steuereinheit 20 vorteilhaft, da die Steuereinheit 20 eine Integritätsreferenzinformation nur während einer Startphase ermitteln und schützen kann. Die kryptographische Prüfsumme ist jedoch im operativen Betrieb, also einem Betriebsmodus, überprüfbar.

Alternativ kann die Erkennungsschnittstelle 14 auch als Datenbus, beispielsweise ein serieller Datenbus derart interintegrierter Schaltkreis I²C oder ein serielles, peripheres Interface, SPI, die jeweils ein Signalisierungsprotokoll aufweisen, ausgebildet sein. Die Betriebserkennungseinheit 13 kann den aktuellen Betriebsmodus bei Änderung des Betriebszustands oder in regelmäßigen oder vorbestimmten Zeitabständen, an die Sicherheitsfunktionseinheit 12 übertragen. Alternativ kann die Sicherheitsfunktionseinheit 12 den aktuellen Betriebsmodus bei der Betriebserkennungseinheit 13 anfordern. Die Kommunikation zwischen der Betriebserkennungseinheit 13 und der Sicherheitsfunktionseinheit 12 ist vorzugsweise kryptographisch geschützt.

In einer Variante kann der aktuelle Betriebsmodus auch von einem anderen Sicherheitselement, insbesondere einer Vor-Sicherheitsfunktion 16, der Sicherheitsfunktionseinheit 12 bereitgestellt werden. Die Sicherheitsfunktionseinheit 12 wird dabei erst dann freigeschaltet, wenn die Betriebsbedingungen in der Vor-Sicherheitsfunktion erfüllt sind. Die Vor-Sicherheitsfunktionseinheit 16 kann beispielsweise derart ausgebildet sein, Sicherheitsfunktionen für das Booten des Geräts 10 beziehungsweise der Steuereinheit 20 bereitzustellen. Die Sicherheitsfunktionseinheit 12 stellt dagegen kryptographische Sicherheitsfunktionen für den operativen Betrieb des Geräts bereit.

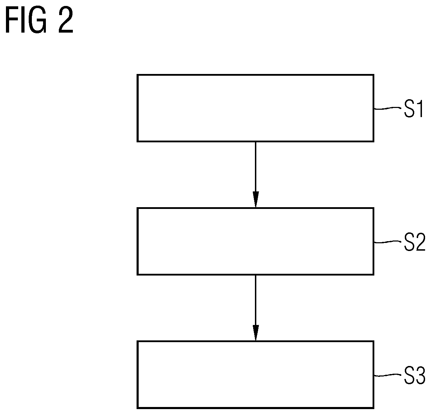

Figur 2 zeigt ein entsprechendes Verfahren zur Überwachung eines Zugriffs auf eine Sicherheitsvorrichtung 11 durch ein Gerät 10.

In einem ersten Verfahrensschritt S1 wird ein aktueller Betriebsmodus des Geräts 10 in der Sicherheitsvorrichtung 11 empfangen. Anschließend wird im Verfahrensschritt S2 der aktuelle Betriebsmodus des Geräts in der Sicherheitsvorrichtung 11 gegenüber einer Richtlinie überprüft. Abhängig von einem Überprüfungsergebnis des aktuellen Betriebsmodus wird in einem weiteren Verfahrensschritt S3 ein Zugriff auf unterschiedliche Funktionen der Sicherheitsvorrichtung durch das Gerät erlaubt. Somit kann flexibel ein Zugriff auf unterschiedliche Sicherheitsfunktionen der Sicherheitsvorrichtung 11 ermöglicht werden, oder aber kein Zugriff auf die Sicherheitsvorrichtung 11 erteilt werden.

Ein aktueller Betriebsmodus ist beispielsweise "Operativer Betrieb", "Stand-by", "Schlafmodus", Startphase, Aufwach-Phase, Aktiv, Ausschalt-Phase aktiv, Dienstzugang möglich, Aktualisierungsmodus, Inbetriebnahmemodus, Selbsttest-Fehler, Integritätsfehler. Weiterhin kann angezeigt werden, ob eine vorgegebene Firmware-Version, beispielsweise eine Original-Firmware, geladen ist, und somit ein sicherer Bootvorgang durchgeführt wurde.

Der aktuelle Betriebsmodus des Gerätes kann insbesondere über eine Nutzerschnittstelle 15, die zwischen dem Gerät, insbesondere einer Steuereinheit des Geräts, und der Sicherheitsfunktionseinheit 12 der Sicherheitsvorrichtung 11 ausgebildet ist, in der Sicherheitsfunktionseinheit 12 empfangen werden.

Des Weiteren wird bevorzugt der aktuelle Betriebsmodus des Geräts von einer Betriebserkennungseinheit 13 ermittelt und gegenüber der Richtlinie geprüft und abhängig vom Prüfergebnis ein Zugriff auf die Sicherheitsfunktionseinheit 12 erlaubt.

Die Richtlinie kann dabei verschiedenen Betriebsmodi unterschiedliche Zugriffsberechtigungen zuweisen, beispielsweise eine Teilmenge der verfügbare Sicherheitsfunktionen erlauben oder weitere Nebenbedingungen zum Betriebsmodus, wie beispielsweise den Nutzer des Geräte oder eine Rolle des Nutzers des Gerätes berücksichtigen und abhängig davon unterschiedliche Sicherheitsfunktionen freischalten oder auch den Zugriff auf die Sicherheitsvorrichtung 11 verweigern. Als weitere Nebenbedingung wird optional geprüft, ob sich das Gerät 10 beziehungsweise die Steuereinheit 20 gegenüber der Sicherheitsvorrichtung 11 authentisiert hat.

Optional kann der Betriebsmodus sowohl von der Steuereinheit 20 über die Nutzerschnittstelle 15 an die Sicherheitsfunktionseinheit 12 übermittelt und dort gegen die Richtlinie überprüft werden als auch von der Betriebserkennungseinheit 13 ermittelt, gegenüber der Richtlinie überprüft und an die Sicherheitsfunktionseinheit 12 übermittelt werden. Somit liegen zwei Zugriffsoptionen in der Sicherheitsfunktionseinheit 12 vor. Die Richtlinie in der Sicherheitsfunktionseinheit 12 und die Richtlinie in der Betriebserkennungseinheit 13 können identisch oder unterschiedlich sein. Sind bei gleichen Richtlinien die Prüfungsergebnisse unterschiedlich, kann ein "Kollisionshinweis" erzeugt und ausgegeben werden. Ist die Richtlinie in der Sicherheitsfunktionseinheit 12 unterschiedlich zu der Richtlinie in der Betriebserkennungseinheit 13, können weitere Zugriffoptionen abhängig von den unterschiedlichen Kombinationen der Prüfungsergebnisse gemäß der Richtlinie in der Sicherheitsfunktionseinheit 12 und die Richtlinie in der Betriebserkennungseinheit 13 ermittelt werden.

Alle beschriebenen und/oder gezeichneten Merkmale können im Rahmen der Erfindung vorteilhaft miteinander kombiniert werden. Die Erfindung ist nicht auf die beschriebenen Ausführungsbeispiele beschränkt.

## Patentansprüche

1. Sicherheitsvorrichtung zur Ausführung mindestens einer kryptographischen Sicherheitsfunktion, die fest oder lösbar mit einem Gerät (10) verbindbar ist, und derart ausgebildet ist,
einen aktuellen Betriebsmodus des Geräts (10) zu empfangen, den aktuellen Betriebsmodus des Geräts (10) gegenüber einer vorgegebenen Richtlinie zu überprüfen, und
abhängig von einem Überprüfungsergebnis des aktuellen Betriebsmodus des Geräts (10) einen Zugriff auf die Sicherheitsvorrichtung (11) durch das Gerät (10) zu erlauben.

2. Sicherheitsvorrichtung nach Anspruch 1, aufweisend
- eine Sicherheitsfunktionseinheit (12), die derart ausgebildet ist, mindestens eine kryptographische Sicherheitsfunktion auszuführen, und
- eine Nutzerschnittstelle (15), die zwischen dem Gerät (10) und der Sicherheitsfunktionseinheit (12) ausgebildet ist, wobei der aktuelle Betriebsmodus des Gerätes (10) über die Nutzerschnittstelle (15) in der Sicherheitsfunktionseinheit (12) empfangbar ist.

3. Sicherheitsvorrichtung nach Anspruch 1, aufweisend eine Betriebserkennungseinheit (13), die derart ausgebildet ist,
- den aktuellen Betriebsmodus des Gerätes (10) zu ermitteln,
- den aktuellen Betriebsmodus gegenüber der Richtlinie zu prüfen, und
- abhängig vom Prüfergebnis einen Zugriff auf die Sicherheitsfunktionseinheit (12) zu erlauben.

4. Sicherheitsvorrichtung nach Anspruch 3, aufweisend eine Erkennungsschnittstelle (14) zwischen der Betriebserkennungseinheit (13) und der Sicherheitsfunktionseinheit (12), über die der aktuelle Betriebsmodus des Gerätes (10) an die Sicherheitsfunktionseinheit (12) übermittelbar ist.

5. Sicherheitsvorrichtung nach Anspruch 4, wobei die Erkennungsschnittstelle (14) als mindestens eine Signalleitung (14) ausgebildet ist, und ein Schaltsignal auf der mindestens einen Signalleitung (14) jeweils einen vorgegebenen Betriebsmodus anzeigt.

6. Sicherheitsvorrichtung nach Anspruch 4, wobei die Erkennungsschnittstelle (14) als Datenbus mit einem Sicherheitsprotokoll ausgebildet ist und der aktuelle Betriebsmodus mittels des Sicherheitsprotokolls anzeigbar ist.

7. Sicherheitsvorrichtung nach einem der Ansprüche 4 bis 6, wobei die Betriebserkennungseinheit (13) mit mindestens einer Betriebseinheit (17, 18, 19) des Geräts (10) verbunden ist und die Betriebserkennungseinheit (13) Betriebsparameter des Geräts (10) von der mindestens einen Betriebseinheit (17, 18, 19) empfängt.

8. Sicherheitsvorrichtung nach einem der vorhergehenden Ansprüche, aufweisend eine Vorsicherheitsfunktionseinheit (16), die derart ausgebildet ist, ein Freischaltesignal an die Sicherheitsfunktionseinheit (12) zu übermitteln, wenn vorgegebene Betriebsbedingungen in Bezug auf den Betriebsmodus des Gerätes (10) in der Vorsicherheitsfunktionseinheit (16) erfüllt sind.

9. Verfahren zur Überwachung eines Zugriffs eines Gerätes (10) auf eine Sicherheitsvorrichtung (11), die mindestens eine kryptographische Sicherheitsfunktion ausführt und die fest oder lösbar mit dem Gerät (10) verbunden ist, wobei in der Sicherheitsvorrichtung (11)
- ein aktueller Betriebsmodus des Geräts (10) empfangen wird (S1),
- der aktueller Betriebsmodus des Geräts (10) gegenüber einer Richtlinie überprüft wird (S2), und
- abhängig von einem Überprüfungsergebnis des aktuellen Betriebsmodus des Gerätes (10) ein Zugriff auf die Sicherheitsvorrichtung (11) durch das Gerät (10) erlaubt wird (S3).

10. Verfahren nach Anspruch 9, wobei der aktuelle Betriebsmodus des Gerätes (10) über eine Nutzerschnittstelle (15), die zwischen dem Gerät (10) und einer Sicherheitsfunktionseinheit (12) der Sicherheitsvorrichtung (11) ausgebildet ist, in der Sicherheitsfunktionseinheit (12) empfangen wird.

11. Verfahren nach Anspruch 9, wobei von einer Betriebserkennungseinheit (13)
- der aktuelle Betriebsmodus des Gerätes (10) ermittelt wird,
- der aktuelle Betriebsmodus gegenüber der Richtlinie geprüft wird, und
- abhängig vom Prüfergebnis einen Zugriff auf die Sicherheitsfunktionseinheit (12) erlaubt wird.

12. Verfahren nach einem der Ansprüche 9 bis 11, wobei der aktuelle Betriebsmodus kryptographisch geschützt an die Sicherheitsfunktionseinheit (12) übermittelt wird.

13. Verfahren nach einem der Ansprüche 9 bis 12, wobei ein Zugriff auf die Sicherheitsfunktionseinheit (12) abhängig von einem Nutzer des Geräts (10) und/oder abhängig von einer Rolle des Nutzers, mit der sich der Nutzer am Gerät (10) angemeldet hat, erlaubt wird.

14. Computerprogrammprodukt, das direkt in einen Speicher eines digitalen Computers ladbar ist, aufweisend Programmcodeteile, die dazu geeignet sind, die Schritte des Verfahrens nach einem der Ansprüche 9 bis 13 durchzuführen.
